(19) Europäisches Patentamt / European Patent Office / Office européen des brevets

(11) **EP 2 717 224 A1**

(12) **EUROPEAN PATENT APPLICATION**
published in accordance with Art. 153(4) EPC

(43) Date of publication:
**09.04.2014 Bulletin 2014/15**

(51) Int Cl.:
*G06T 11/20* (2006.01)

(21) Application number: **12793713.4**

(22) Date of filing: **22.05.2012**

(86) International application number:
**PCT/JP2012/063098**

(87) International publication number:
**WO 2012/165238 (06.12.2012 Gazette 2012/49)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.05.2011 JP 2011121105**

(71) Applicant: **Aisin Seiki Kabushiki Kaisha**
**Kariya-shi, Aichi 448-8650 (JP)**

(72) Inventors:
• **YAMAMOTO Tomohiro**
  **Kariya-shi**
  **Aichi-ken 448-8650 (JP)**
• **ISHIGURO Hiroshi**
  **Kariya-shi**
  **Aichi-ken 448-8650 (JP)**
• **TOYOSHIMA Ryozo**
  **Kariya-shi**
  **Aichi-ken 448-8650 (JP)**

(74) Representative: **TBK**
**Bavariaring 4-6**
**80336 München (DE)**

(54) **RENDERING DEVICE, RENDERING METHOD, AND PROGRAM**

(57) The rendering device defines, based on the width of the line to be rendered on a screen comprising multiple pixels and defined by two points on the screen, an interpolation range for a line segment having its ends at the two points. The rendering device further determines whether a pixel is contained in the interpolation range. Then, the rendering device renders a line formed by the pixels on the line segment and the pixels determined to be contained in the interpolation range. Then, the rendering device can specify the pixels for rendering the line based only on information regarding the line width. Consequently, the amount of information to handle in rendering is reduced and the rendering can be expedited. Furthermore, the amount of information prepared in advance for rendering is reduced and thus the rendering device can be downsized.

**EP 2 717 224 A1**

FIG.4

START

Xa = Abs(Xep − Xst)
Ya = Abs(Yep − Yst)
XYsft = Int(s_wdt/2)      ~ S201

Xb = 0 − XYsft
Yb = 0 − XYsft            ~ S202

XaYb = Xa·Yb
YaXb = Ya·Xb
YaXbInt = YaXb
Xa2 = Int(Xa/2)
Ya2 = Int(Ya/2)          ~ S203

Xa2 = Xa2 + Xa·Int(s_wdt/2)
Ya2 = Ya2 + Ya·Int(s_wdt/2)   ~ S204

Xdp = 0
Ydp = 0                  ~ S205

RENDERING PROCEDURE     ~ S206

END

## Description

Technical Field

The present invention relates to a rendering device, rendering method, and program, and more specifically to a rendering device rendering lines on a screen and a rendering method and program for rendering lines on a screen.

Background Art

Recently, assist devices for assisting a driver put a vehicle in a garage or in a parallel parking space have emerged. Such an assist device displays lines presenting the vehicle width and the anticipated trajectory of the vehicle superimposed on a vehicle rear view image on a monitor screen. For rendering such lines, for example, DDAs (digital differential analyzers) are often used. Using a DDA, an assist device can easily execute calculations necessary for rendering lines and render the lines on the monitor screen in a short time.

When a line defined by two different points is rendered using a DDA, the width of a rendering-target line basically depends on the size of a pixel such as the width or height of a pixel. Then, various techniques for rendering a line of a desired width using a DDA have been proposed (for example, see Patent Literature 1 and 2).

Prior Art Documents

Patent Literature

Patent Literature 1: Unexamined Japanese Patent Application Kokai Publication No. H04-23179; and
Patent Literature 2: Unexamined Japanese Patent Application Kokai Publication No. H08-279038.

Summary of Invention

Technical Problem

The device described in the above Patent Literature 1 renders a rendering-target line based on the DDA algorithm and renders a dot pattern based on the width of the line. On the other hand, the device described in the above Patent Literature 2 renders a rendering-target line based on the DDA algorithm and renders normal lines of a length equal to the width of the rendering-target line superimposed on the rendering-target line. The above two devices render a dot pattern or normal lines based on the width of the line to display a line of a desired width.

However, the device described in the Patent Literature 1 requires the dot patterns based on the line widths to be stored in advance. Therefore, a memory of a certain size in capacity is required for storing the dot patterns. Consequently, a problem is that the device is increased in size.

On the other hand, the device described in the Patent Literature 2 calculates the normal lines perpendicular to a rendering-target line by complex calculation. Therefore, the arithmetic circuit presumably becomes complex. Furthermore, it is presumably difficult to display the lines on the monitor screen in a short time.

The present invention is invented under the above circumstances and an exemplary objective of the present invention is to expedite the rendering while simplifying the device.

Solution to Problem

In order to achieve the above objective, the rendering device according to a first exemplary aspect of the present invention is a rendering device rendering a line defined by two points on a screen comprising multiple pixels, comprising:

interpolation range defining means defining, based on the width of the line, an interpolation range for a line segment having its ends at the two points;
determination means determining whether a pixel is contained in the interpolation range; and
rendering means rendering a line formed by the pixels on the line segment and the pixels determined to be contained in the interpolation range.

In order to achieve the above objective, the rendering method according to a second exemplary aspect of the present invention is a rendering method of rendering, on a screen comprising multiple pixels, a line defined by two points, comprising the following steps:

defining an interpolation range for a line segment, having its ends at the two points, based on the width of the line;
determining whether a pixel is contained in the interpolation range; and
rendering a line formed by the pixels on the line segment and the pixels determined to be contained in the interpolation range.

In order to achieve the above objective, the program according to a third exemplary aspect of the present invention allows a computer to execute the following procedures:

defining an interpolation range for a line segment, having its ends at two points on a screen comprising multiple pixels, based on the width of a line to render;
determining whether a pixel is contained in the interpolation range; and
rendering a line formed by the pixels on the line segment and the pixels determined to be contained in the interpolation range.

Advantageous Effects of Invention

The present invention defines an interpolation range around a line segment defined by two points, based on information regarding the line width. Then, the pixels contained in the interpolation range are used to render the line. Therefore, the amount of information to handle in rendering is reduced and the rendering can be expedited. Furthermore, the amount of information stored in advance for rendering is reduced and thus the device can be downsized.

Brief Description of Drawings

FIG. 1 is a block diagram of a rear view monitor system according to the embodiment;
FIG. 2 is an illustration showing the position of the imaging device;
FIG. 3 is an illustration schematically showing the screen of the display;
FIG. 4 is a flowchart showing a series of processing executed by the CPU;
FIG. 5 is a flowchart showing the rendering procedure executed by the CPU;
FIG. 6 is an illustration showing a rendering range;
FIG. 7 is an illustration for explaining the rendering proceeding;
FIG. 8 is an illustration for explaining the rendering proceeding;
FIG. 9 is an illustration for explaining the rendering proceeding;
FIG. 10 is an illustration for explaining the rendering proceeding;
FIG. 11 is an illustration for explaining the rendering proceeding; and
FIG. 12 is an illustration showing an interpolation range.

The Embodiment of the Invention

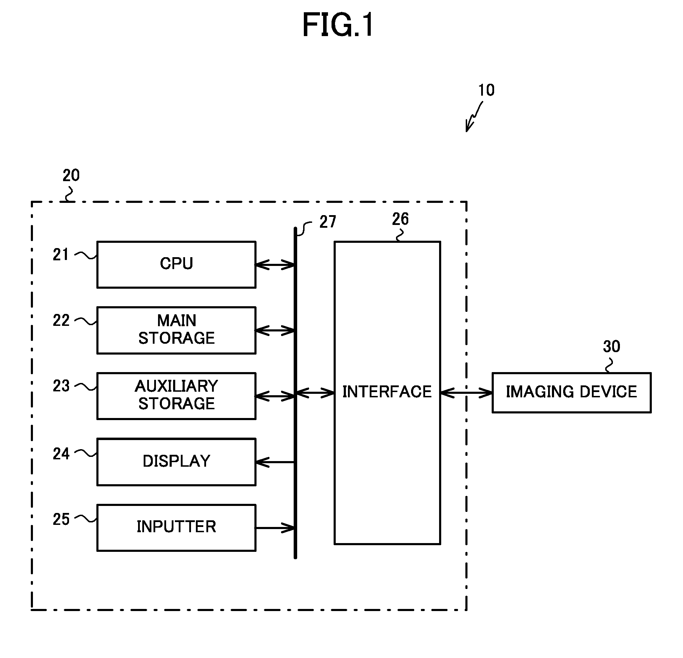

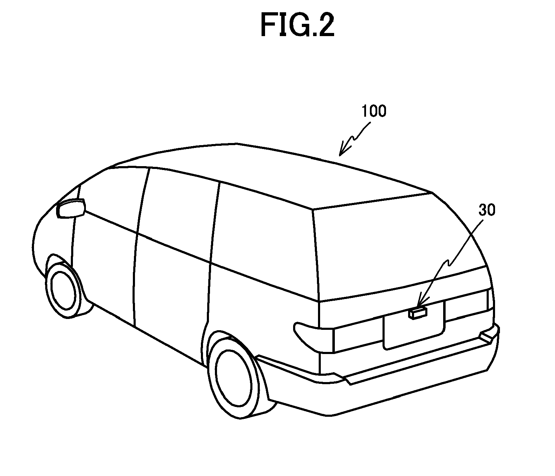

An embodiment of the present invention will be described hereafter with reference to the drawings. FIG. 1 is a block diagram showing the general configuration of a rear view monitor system 10 according to this embodiment. The rear view monitor system 10 is a device displaying lines presenting the vehicle trajectory and vehicle width, for example, superimposed on a vehicle rear view image. As shown in FIG. 1, the rear view monitor system 10 has a rendering device 20 and an imaging device 30.
The imaging device 30 is mounted at the rear end of a vehicle 100, for example, as shown in FIG. 2. The orientation and view angle of the imaging device 30 are adjusted so that the surface of the road behind the vehicle appears in the field of view. Then, the imaging device 30 converts a photographed image to electric signals and outputs the electric signals.
Returning to FIG. 1, the rendering device 20 is a computer having a CPU (central processing unit) 21, a main storage 22, an auxiliary storage 23, a display 24, an inputter 25, and an interface 26.
The CPU 21 reads and executes programs stored in the auxiliary storage 23 to render on the screen of the display 24 the lines presenting the trajectory and width of the vehicle 100 on top of an image of the rear view of the vehicle 100. Executing the programs, the CPU 21 can render lines of desired widths.
The main storage 22 has a volatile memory such as a RAM (random access memory). The main storage 22 is used as the work area of the CPU 21.

The auxiliary storage 23 has a nonvolatile memory such as a ROM (read only memory), magnetic disk, and semiconductor memory. The auxiliary storage 23 stores various parameters and programs executed by the CPU 21. Furthermore, the auxiliary storage 23 stores information regarding images output from the imaging device 30 in sequence and information including the results of processing by the CPU 21.

The display 24 has a display device such as an LCD (liquid crystal device). The display 24 displays the results of processing by the CPU 21 and the like.

The inputter 25 has input keys and a pointing device such as a touch panel. Operator commands are entered via the inputter 25 and supplied to the CPU 21 via a system bus 27.

The interface 26 is configured to include a serial interface or LAN (local area network) interface. The imaging device 30 is connected to the system bus 27 via the interface 26.

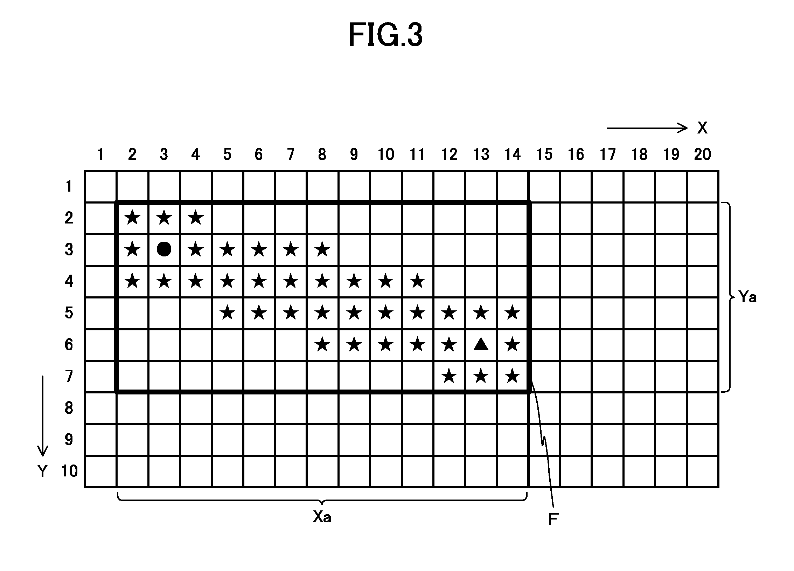

Operation of the CPU 21 to render a line will be described hereafter. For convenience of explanation, it is assumed that the display 24 has a screen comprising pixels arranged in a matrix of 10 rows and 20 columns as shown in FIG. 3. Then, a pixel in a row m and column n is referred to as a pixel D (m, n). Here, (m, n) is equivalent to the coordinates on the screen of the display 24.

It is further assumed that a line to be rendered by the CPU 21 is a line sloping downward from left to right and defined by a pixel D (3, 3) marked by a circle and a pixel D (13, 6) marked by a triangle. It is further assumed that the line to be rendered has a width of 3 in the vertical direction.

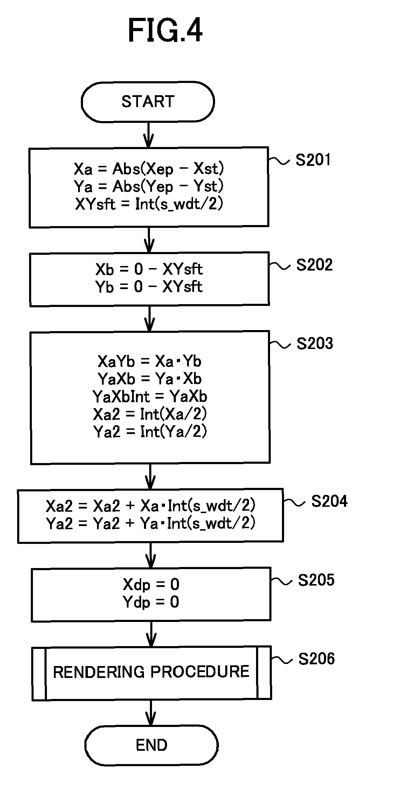

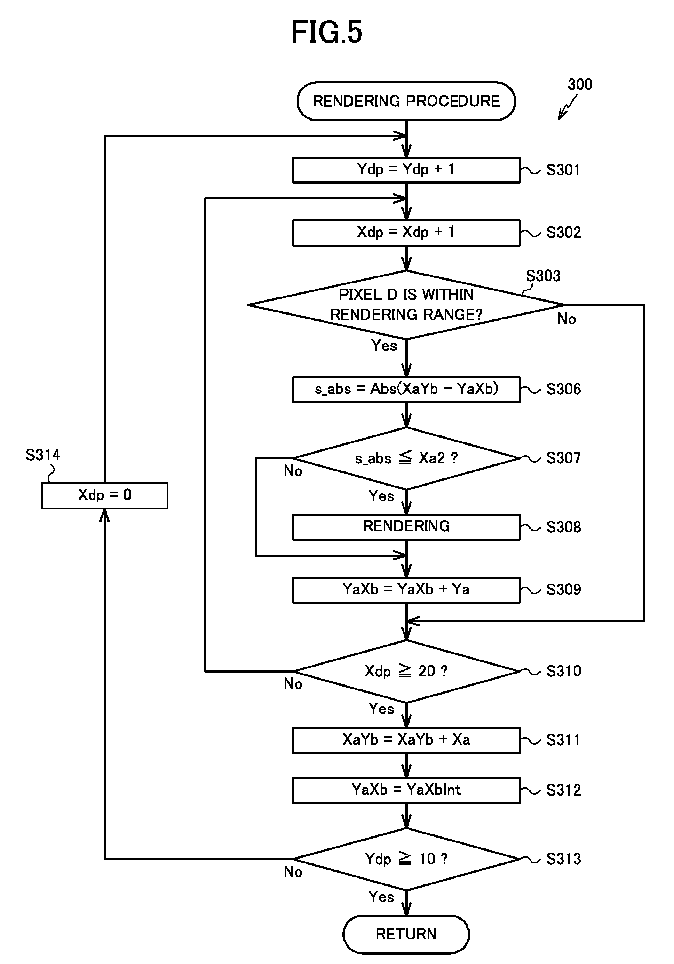

The flowcharts in FIGS. 4 and 5 correspond to a series of processing (the algorithm) of programs executed by the CPU 21. Operation of the rear view monitor system 10 will be described hereafter with reference to FIGS. 4 and 5. The series of processing shown in the flowcharts of FIGS. 4 and 5 starts, for example, when the driver shifts the gear to the reverse.

First, in Step S201, the CPU 21 calculates the distances Xa and Ya to a rendering end pixel from a rendering start pixel as the reference point. For example, if the rendering start pixel is a pixel D (Xst, Yst) and the rendering end pixel is a pixel D (Xep, Yep), the distances Xa and Ya are given by the expressions (1) and (2) below, respectively, in which the function Abs (x) is a function outputting the absolute value of X.

$$Xa = Abs\,(Xep - Xst) \dots (1)$$

$$Ya = Abs\,(Yep - Yst) \dots (2)$$

When the rendering start pixel is the pixel D (3, 3) and the rendering end pixel is the pixel D (13, 6) as in the above assumption, the distances Xa and Ya are calculated to be 10 and 3, respectively.

The CPU 21 further calculates the shift rate XYsft defining the line width based on the expression (3) below in which the function Int (x) is a function outputting the maximum integer not exceeding x and s_wdt is the width of the line to be rendered, which is 3 in the above assumption. Then, the shift rate XYsft is calculated to be 1.

$$XYsft = Int\,(s\_wdt\,/\,2) \dots (3)$$

In the next Step S202, the CPU 21 calculates parameters Xb and Yb dependent on the line width based on the expressions (4) and (5) below.

$$Xb = 0 - XYsft \dots (4)$$

$$Yb = 0 - XYsft \dots (5)$$

The parameters Xb and Yb are parameters for adjusting the rendering start position based on the line width. When the line width is 3 as in the above assumption, the parameters Xb and Yb are each calculated to be -1 (= 0 - 1). This means, as seen with reference to FIG. 3, that rendering of the line starts from a pixel D (2, 2) that is away from the rendering start pixel D (3, 3) by -1 in the X direction and by -1 in the Y direction.

In the next Step S203, the CPU 21 calculates parameters XaYb and YaXb based on the expressions (6) and (7) below. Then, the CPU 21 sets the calculated value of the parameter YaXb as an initial value YaXbInt.

$$XaYb = Xa \cdot Yb \ldots (6)$$

$$YaXb = Ya \cdot Xb \ldots (7)$$

On the above assumption, the distance Xa is 10 and the parameter Yb is -1; then, the parameter XaYb is calculated to be -10. Furthermore, the distance Ya is 3 and the parameter Xb is -1; then, the parameter YaXb is calculated to be -3. Furthermore, the initial value YaXbInt is set to -3.

The CPU 21 further calculates parameters Xa2 and Ya2 based on the expressions (8) and (9) below.

$$Xa2 = Int (Xa / 2) \ldots (8)$$

$$Ya2 = Int (Ya / 2) \ldots (9)$$

On the above assumption, the distance Xa is 10 and the distance Ya is 3. Then, the parameters Xa2 and Ya2 are calculated to be 5 and 1, respectively.

In the next Step S204, the CPU 21 executes calculation presented by the expressions (10) and (11) below to update the parameters Xa2 and Ya2 based on the line width. In the above assumption, the line width is 3; then, Int (s_wdt / 2) is calculated to be 1. Then, the value of the distance Xa is added to the parameter Xa2 once to obtain the new value of the parameter Xa2 (the index value). Furthermore, the value of the distance Ya is added to the parameter Ya2 once to obtain the new value of the parameter Ya2 (the index value).

$$Xa2 = Xa2 + Xa \cdot Int (s\_wdt / 2) \ldots (10)$$

$$Ya2 = Ya2 + Ya \cdot Int (s\_wdt / 2) \ldots (11)$$

On the above assumption, the value of the parameter Xa2 is updated to 15 (= 5 + 10) from 5 and the value of the parameter Ya2 is updated to 4 (= 1 + 3) from 1.

In the next Step S205, the CPU 21 initializes each of the values of parameters Xdp and Ydp for specifying the pixels constituting the screen of the display 24 to zero.

In the next Step S206, the CPU 21 executes a subroutine 300 for realizing the rendering procedure. In the subroutine 300, first, the CPU 21 increments the parameter Ydp in Step S301.

In the next Step S302, the CPU 21 increments the parameter Xdp.

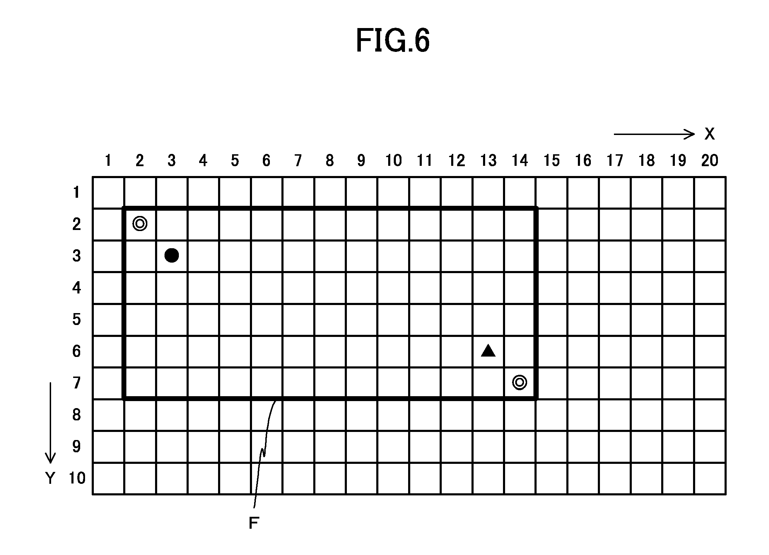

In the next Step S303, the CPU 21 checks whether the pixel D (Xdp, Ydp) is within the rendering range. FIG. 6 shows a rendering range F. The rendering range F is defined by the rendering start pixel D (Xst, Yst), rendering end pixel D (Xep, Yep), and shift rate XYsft. More specifically, the rendering range F is defined as a rectangular area containing in its corners a pixel D (Xst - XYsft, Yst - XYsft) and a pixel D (Xep + XYsft, Yep + XYsft) marked by double circles in FIG. 6.

If the pixel D (Xdp, Ydp) is not contained within the rendering range F (Step S303; No), the CPU 21 shifts to Step S310.

In the Step S310, the CPU 21 determines whether the value of the parameter Xdp is equal to or greater than 20. Then, if the value of the parameter Xdp is less than 20 (Step S310; No), the CPU 21 returns to the Step S302.

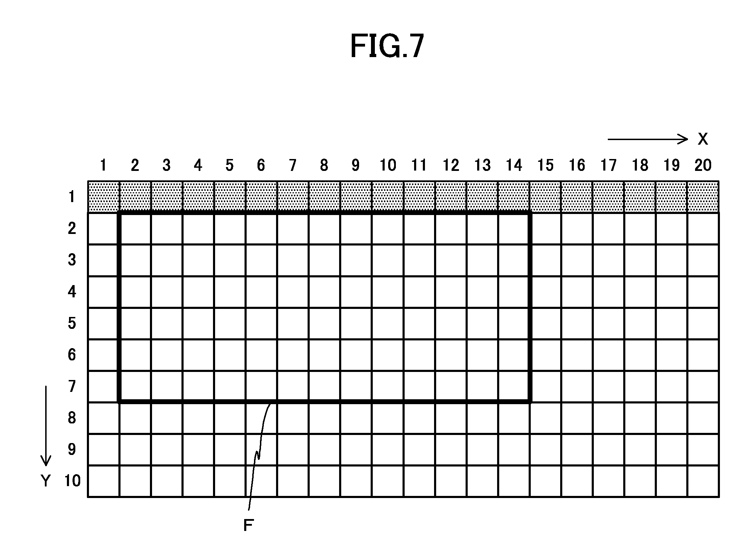

As seen with reference, for example, to FIG. 7, when the value of the parameter Ydp is 1 and the value of the parameter Xdp is changed from 1 to 20, the shaded pixels D (Xdp, Ydp) in the first row are specified. Then, in such a case, the determination in the Step S303 is not affirmed and the CPU 21 repeats the processing of the Steps S302, S303, and S310. Consequently, the state of the pixels in the first row is specified as being off.

Then, as the value of the parameter Xdp becomes 20, the determination in the Step S310 is affirmed (Step S310; Yes); then, the CPU 21 shifts to Step S311.

In the Step S311, the CPU 21 updates the parameter XaYb based on the expression (12) below.

$$XaYb = XaYb + Xa \ldots (12)$$

On the above assumption, the value of the parameter XaYb is -10 and the distance Xa is 10. Then, the value of the parameter XaYb is updated to zero.

In the next Step S312, the CPU 21 sets the value of the parameter YaXb to be equal to the initial value YaXbInt. On the above assumption, the initial value YaXbInt is -3; then, the value of the parameter YaXb is set to -3.

In the next Step S313, the CPU 21 determines whether the value of the parameter Ydp is equal to or greater than 10. Then, if the value of the parameter Ydp is lower than 10 (Step S313; No), the CPU 21 shifts to Step S314.

In the Step S314, the CPU 21 initializes the value of the parameter Xdp to zero. Then, the CPU 21 returns to the Step S301 and increments the value of the parameter Ydp. For example, during the second execution of the Step S301, the value of the parameter Ydp becomes 2.

In the subsequent steps, the CPU 21 executes the processing of the Steps S302, S303, and S310. Then, as a result of the processing in the Step S302, the value of the parameter Xdp becomes 2. Therefore, the pixel D (Xdp, Ydp) defined by the parameters Xdp and Ydp is a pixel D (2, 2).

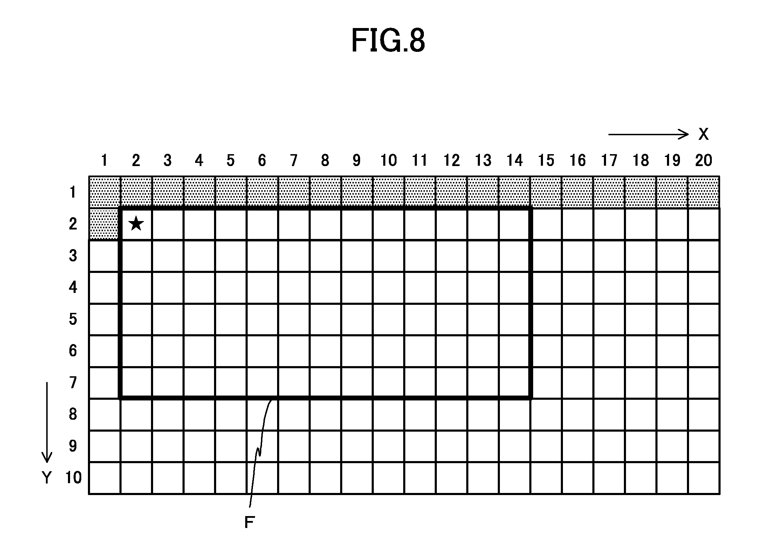

As seen with reference to FIG. 8, the pixel D (2, 2) is positioned within the rendering range F. Therefore, the determination in the Step S303 is affirmed (Step S303: Yes) and the CPU 21 shifts to Step S306.

In the Step S306, the CPU 21 calculates the value of a parameter s_abs based on the expression (14) as a given conditional expression below. When both the parameter Xdp and the parameter Ydp are 2, the value of the parameter XaYb is -10 and the value of the parameter YaXb is -3. Therefore, the value of the parameter s_abs is calculated to be 7.

$$s\_abs = Abs\,(XaYb - YaXb) \ldots (14)$$

In the next Step S307, the CPU 21 determines whether the value of the parameter s_abs is equal to or less than the value of the parameter Xa2. On the above assumption, the value of the parameter Xa2 is 15; then, the determination in the Step S307 is affirmed (Step S307: Yes). Then, the CPU 21 shifts to Step S308 and specifies the state of the pixel D (2, 2) as being on. Consequently, the pixel D (2, 2) marked by a star in FIG. 8 is turned on.

In the next Step S309, the CPU 21 updates the value of the parameter YaXb based on the expression (15) below. When both the parameter Xdp and the parameter Ydp are 2, the value of the parameter YaXb is -3 and the value of the parameter Ya is 3. Then, the value of the parameter YaXb is updated to zero.

$$YaXb = YaXb + Ya \ldots (15)$$

In the next Step S310, since the value of the parameter Xdp is 2 (Step S310; No), the CPU 21 returns to the Step S302.

In the subsequent steps, as a result of the processing in the Step S302, the value of the parameter Xdp becomes 3. Then, the CPU 21 shifts to the Step S306 via the Step S303. Subsequently, as a result of the processing in the Step S306, the value of the parameter s_abs is calculated to be 10 (= Abs (-10 - 0)). Since the parameter Xa2 is 15, the determination in the Step S307 is affirmed (Step S307; Yes) and the pixel D (2, 3) is turned on (Step S308).

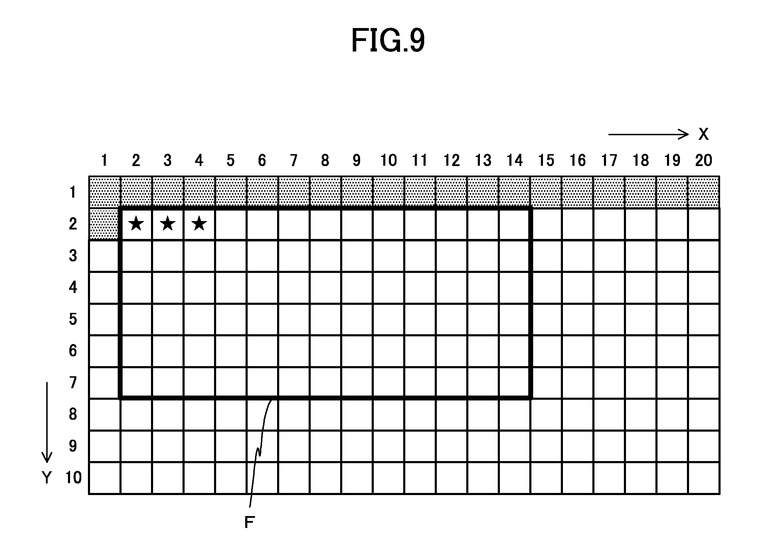

Similarly, when the value of the parameter Xdp becomes 4 as a result of the processing in the Step S302, the CPU 21 shifts to the Step S306 via the Step S303. Subsequently, as a result of the processing in the Step S306, the value of the parameter s_abs is calculated to be 13 (= Abs (-10 - 3)). Since the parameter Xa2 is 15, the determination in the Step S307 is affirmed (Step S307; Yes) and the pixel D (2, 4) is turned on. Consequently, as shown in FIG. 9, the consecutive pixels D (2, 2), D (2, 3), and D (2, 4) marked by stars are turned on (Step S308).

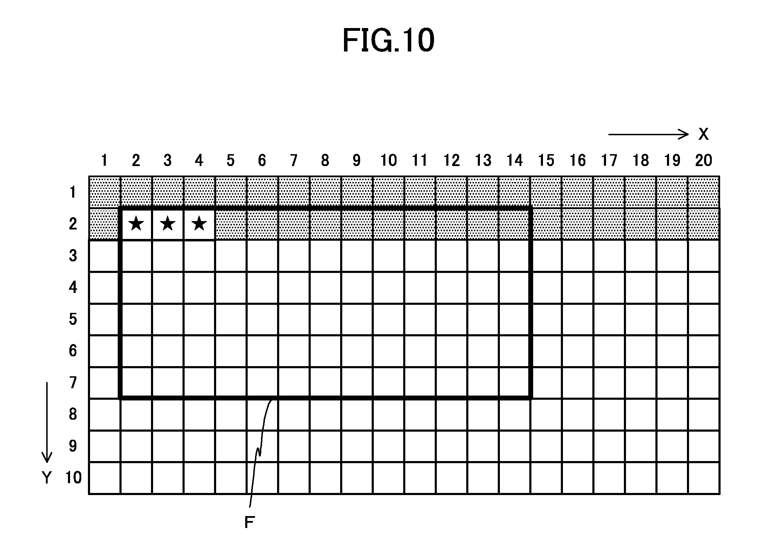

Subsequently, when the value of the parameter Xdp becomes 5 as a result of the processing in the Step S302, the value of the parameter s_abs is calculated to be 16 (= Abs (-10 - 6)) as a result of the processing in the Step S306 subsequent to the Step S303. Since the parameter Xa2 is 15, the determination in the Step S307 is negated (Step S307; No) and the pixel D (2, 5) is turned off. From then on, the processing of the Steps S302 to S310 is repeated until the determination in the Step S310 is affirmed. Consequently, the pixels D (2, 5) to D (2, 20) shaded in FIG. 10 are turned off.

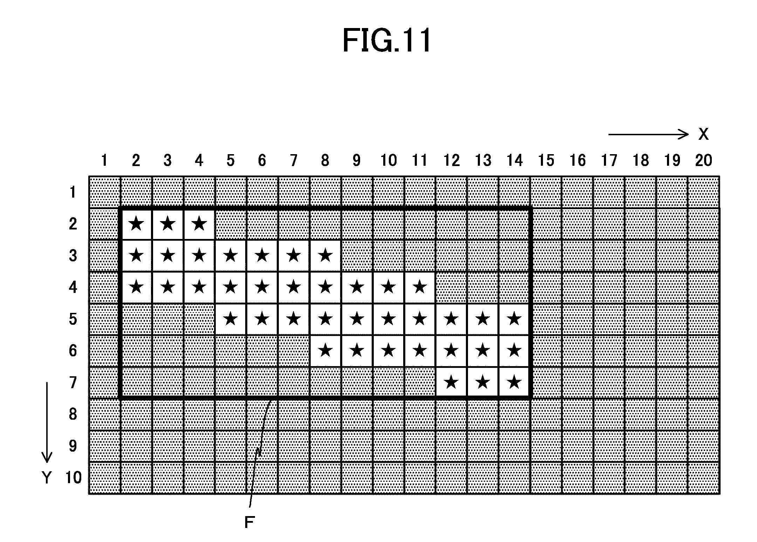

From then on, the CPU 21 repeatedly executes the above-described processing of the Steps S301 to S314 until the determination in the Step S313 is affirmed. Consequently, a line having a width of 3 in the vertical direction is rendered as presented by the pixels D marked by stars in FIG. 11. The CPU 21 ends the series of processing as the determination in the Step S313 is affirmed.

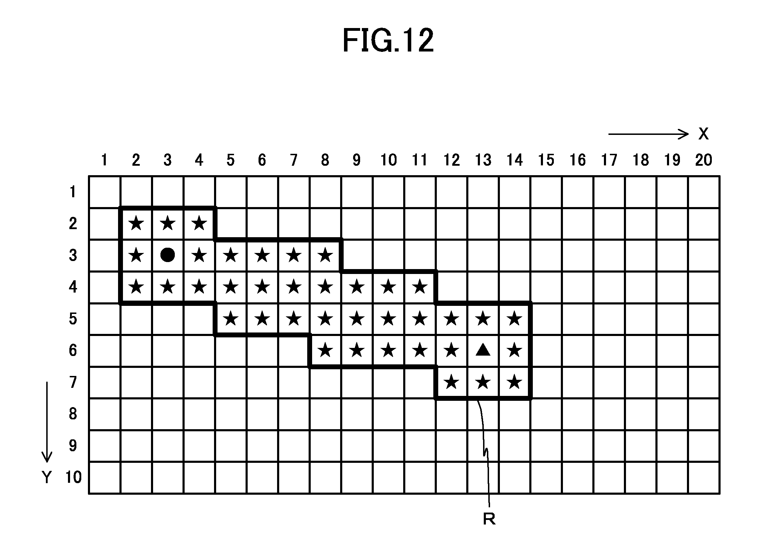

As described above, the rear view monitor system 10 according to this embodiment executes the procedure shown in FIGS. 4 and 5. As a result, as schematically shown in FIG. 12, an interpolation range R containing a line segment defined by a pixel D (3, 3) marked by a circle and a pixel D (13, 6) marked by a triangle is defined. The interpolation range R is indirectly defined by the parameter Xa2 updated based on the line width in the Step S204.

Therefore, it is possible to specify the pixels for rendering a line based only on information regarding the line width. Then, the amount of information to handle in rendering is reduced and the rendering device 20 can expedite the rendering. Furthermore, the amount of information prepared in advance for rendering is reduced and thus the main storage 22 and auxiliary storage 23 can be downsized. As a result, the rear view monitor system 10 can be reduced in size and cost.

An embodiment of the present invention is described above. The present invention is not confined to the above-described embodiment.

For example, in the above-described embodiment, as seen with reference to FIG. 3, a case in which the distance Xa is greater than the distance Ya is described. On the other hand, if the distance Ya is greater than the distance Xa, the CPU 21 compares the value of the parameter Ya2 calculated in the Step S204 with the value of the parameter s_abs in the Step S307. As a result, the CPU 21 can render a line of a desired width.

In the above-described embodiment, a case of rendering a line sloping downward from left to right is described. This is not restrictive. A line sloping upward from left to right can be rendered by the same scheme.

In the above-described embodiment, it is assumed that the display 24 has a screen comprising pixels arranged in a matrix of 10 rows and 20 columns. This is not restrictive. The pixels constituting the display 24 can be arranged in a matrix of, for example, 480 rows and 800 columns.

The function of the rendering device 20 according to the above-described embodiment can be realized by dedicated hardware or a conventional computer system.

The programs stored in the auxiliary storage 23 of the rendering device 20 in the above-described embodiment can be stored and distributed on a computer readable recording medium such as a flexible disk, CD-ROM (compact disk read-only memory), DVD (digital versatile disk), and MO (magnetooptical disk), and then the programs can be installed on a computer so as to configure a device executing the above-described processing.

When the above-described function is partly realized by an OS (operation system) or realized by cooperation of an OS and application programs, only the non-OS part can be stored and distributed on a medium or downloaded on a computer.

Various embodiments and modifications are available to the present invention without departing from the broad sense of spirit and scope of the present invention. The above-described embodiment is given for explaining the present invention and does not confine the scope of the present invention.

This application is based on Japanese Patent Application No. 2011-121105, filed on May 30, 2011, the entire specification, scope of claims, and drawings of which are incorporated herein by reference.

Industrial Applicability

The rendering device, rendering method, and program of the present invention are suitable for rendering lines on a screen.

Reference Signs List

| | |
|---|---|
| 10 | Rear view monitor system |
| 20 | Rendering device |
| 21 | CPU |
| 22 | Main storage |
| 23 | Auxiliary storage |
| 24 | Display |
| 25 | Inputter |

| 26  | Interface           |
|-----|---------------------|
| 27  | System Bus          |
| 30  | Imaging device      |
| 100 | Vehicle             |
| D   | Pixel               |
| F   | Rendering range     |
| R   | Interpolation range |

**Claims**

1. A rendering device rendering a line defined by two points on a screen comprising multiple pixels, comprising:

   interpolation range defining means defining, based on the width of the line, an interpolation range for a line segment having its ends at the two points;
   determination means determining whether a pixel is contained in the interpolation range; and
   rendering means rendering a line formed by the pixels on the line segment and the pixels determined to be contained in the interpolation range.

2. The rendering device according to Claim 1, wherein
   the interpolation range defining means calculates an index value defining the interpolation range, and
   the determination means determines whether a pixel is contained in the interpolation range based on the result of comparison between the result of calculation by a given conditional expression and the index value.

3. The rendering device according to Claim 2, wherein
   the determination means determines that the pixel is contained in the interpolation range when the absolute value of the result of calculation is less than the index value.

4. The rendering device according to Claim 2 or 3, wherein
   the result of calculation by the given conditional expression on a pixel on the line segment is zero.

5. A rendering method of rendering, on a screen comprising multiple pixels, a line defined by two points, comprising the following steps:

   defining an interpolation range for a line segment, having its ends at the two points, based on the width of the line;
   determining whether a pixel is contained in the interpolation range; and
   rendering a line formed by the pixels on the line segment and the pixels determined to be contained in the interpolation range.

6. A program allowing a computer to execute the following procedures:

   defining an interpolation range for a line segment, having its ends at two points on a screen comprising multiple pixels, based on the width of a line to render;
   determining whether a pixel is contained in the interpolation range; and
   rendering a line formed by the pixels on the line segment and the pixels determined to be contained in the interpolation range.

# FIG.1

# FIG.2

FIG.3

EP 2 717 224 A1

# FIG.4

```
        ┌──────────────┐
        │    START     │
        └──────────────┘
                │
                ▼
   ┌─────────────────────────┐
   │   Xa = Abs(Xep − Xst)   │ ～ S201
   │   Ya = Abs(Yep − Yst)   │
   │   XYsft = Int(s_wdt/2)   │
   └─────────────────────────┘
                │
                ▼
   ┌─────────────────────────┐
   │     Xb = 0 − XYsft      │ ～ S202
   │     Yb = 0 − XYsft      │
   └─────────────────────────┘
                │
                ▼
   ┌─────────────────────────┐
   │      XaYb = Xa·Yb       │ ～ S203
   │      YaXb = Ya·Xb       │
   │      YaXbInt = YaXb     │
   │      Xa2 = Int(Xa/2)    │
   │      Ya2 = Int(Ya/2)    │
   └─────────────────────────┘
                │
                ▼
   ┌──────────────────────────────┐
   │ Xa2 = Xa2 + Xa·Int(s_wdt/2)  │ ～ S204
   │ Ya2 = Ya2 + Ya·Int(s_wdt/2)  │
   └──────────────────────────────┘
                │
                ▼
   ┌─────────────────────────┐
   │        Xdp = 0          │ ～ S205
   │        Ydp = 0          │
   └─────────────────────────┘
                │
                ▼
   ┌─────────────────────────┐
   ║  RENDERING PROCEDURE    ║ ～ S206
   └─────────────────────────┘
                │
                ▼
        ┌──────────────┐
        │     END      │
        └──────────────┘
```

# FIG.5

```
                    ┌──────────────────────────┐        300
                    │   RENDERING PROCEDURE     │       ↙
                    └──────────────────────────┘
                                 │
          ┌──────────────────────┼───────────────────────────┐
          │         ┌────────────┼──────────────┐            │
          │         │   ┌────────▼──────────┐    │            │
          │         │   │    Ydp = Ydp + 1   │────┼── S301     │
          │         │   └───────────────────┘    │            │
          │         │            │               │            │
          │         │   ┌────────▼──────────┐    │            │
          │         │   │    Xdp = Xdp + 1   │────┼── S302     │
          │         │   └───────────────────┘    │            │
          │         │            │               │            │
          │         │          ◇ PIXEL D IS WITHIN           │    S303
          │         │          ◇ RENDERING RANGE? ◇──No──────────┐
          │         │            │ Yes                          │
          │         │   ┌────────▼──────────────────┐           │
          │         │   │ s_abs = Abs(XaYb − YaXb)  │── S306     │
          │         │   └───────────────────────────┘           │
          │         │            │                              │
          │         │          ◇ s_abs ≦ Xa2 ? ◇── S307         │
          │         │   No ──────┤ Yes                          │
          │         │   │  ┌──────▼──────────┐                  │
          │         │   │  │   RENDERING     │── S308           │
          │         │   │  └─────────────────┘                  │
          │         │   │         │                             │
          │         │   └─────────┤                             │
          │         │   ┌─────────▼─────────┐                   │
          │         │   │  YaXb = YaXb + Ya │── S309            │
          │         │   └───────────────────┘                   │
          │         │            │◄─────────────────────────────┘
          │         │          ◇ Xdp ≧ 20 ? ◇── S310
          │         └──── No ────┤ Yes
          │                      │
  S314              ┌────────────▼──────────┐
  ┌──────────┐      │   XaYb = XaYb + Xa    │── S311
  │ Xdp = 0  │      └───────────────────────┘
  └──────────┘                  │
          ▲          ┌──────────▼──────────┐
          │          │   YaXb = YaXbInt    │── S312
          │          └─────────────────────┘
          │                     │
          │                   ◇ Ydp ≧ 10 ? ◇── S313
          └──────── No ────────┤ Yes
                               │
                    ┌──────────▼──────────┐
                    │       RETURN        │
                    └─────────────────────┘
```

FIG.6

FIG.7

EP 2 717 224 A1

# FIG.8

FIG.9

# FIG.10

# FIG.11

EP 2 717 224 A1

# FIG.12

EP 2 717 224 A1

## INTERNATIONAL SEARCH REPORT

| International application No. |
|---|
| PCT/JP2012/063098 |

**A. CLASSIFICATION OF SUBJECT MATTER**
*G06T11/20*(2006.01)i

According to International Patent Classification (IPC) or to both national classification and IPC

**B. FIELDS SEARCHED**

Minimum documentation searched (classification system followed by classification symbols)
G06T11/20

Documentation searched other than minimum documentation to the extent that such documents are included in the fields searched
| | | | |
|---|---|---|---|
| Jitsuyo Shinan Koho | 1922–1996 | Jitsuyo Shinan Toroku Koho | 1996–2012 |
| Kokai Jitsuyo Shinan Koho | 1971–2012 | Toroku Jitsuyo Shinan Koho | 1994–2012 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 9-212665 A (Fuji Xerox Co., Ltd.), 15 August 1997 (15.08.1997), paragraphs [0001] to [0008]; fig. 4, 7 (Family: none) | 1-6 |
| Y | JP 8-279038 A (Fuji Xerox Co., Ltd.), 22 October 1996 (22.10.1996), abstract; paragraphs [0001] to [0008]; fig. 5, 7 (Family: none) | 1-6 |
| Y | JP 10-275239 A (Mutoh Industries, Ltd.), 13 October 1998 (13.10.1998), abstract; fig. 1, 5, 6 (Family: none) | 1-6 |

| ☒ Further documents are listed in the continuation of Box C. | ☐ See patent family annex. |
|---|---|

\* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 05 July, 2012 (05.07.12) | 17 July, 2012 (17.07.12) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

| | International application No. |
|---|---|
| | PCT/JP2012/063098 |

C (Continuation). DOCUMENTS CONSIDERED TO BE RELEVANT

| Category* | Citation of document, with indication, where appropriate, of the relevant passages | Relevant to claim No. |
|---|---|---|
| Y | JP 8-138065 A (Canon Inc.),<br>31 May 1996 (31.05.1996),<br>abstract; paragraphs [0001] to [0009]<br>(Family: none) | 1-6 |
| A | JP 2008-027350 A (Canon Inc.),<br>07 February 2008 (07.02.2008),<br>abstract; fig. 1, 3, 6, 7<br>(Family: none) | 1-6 |
| A | JP 6-161417 A (Fuji Facom Corp.),<br>07 June 1994 (07.06.1994),<br>entire text; all drawings<br>(Family: none) | 1-6 |
| A | JP 3-125277 A (Fuji Xerox Co., Ltd.),<br>28 May 1991 (28.05.1991),<br>entire text; all drawings<br>(Family: none) | 1-6 |
| A | JP 3-001283 A (Mitsubishi Electric Corp.),<br>07 January 1991 (07.01.1991),<br>entire text; all drawings<br>(Family: none) | 1-6 |
| A | JP 2-126377 A (Fujitsu Ltd.),<br>15 May 1990 (15.05.1990),<br>claims; fig. 4<br>(Family: none) | 1-6 |
| A | JP 1-166177 A (Fujitsu Ltd.),<br>30 June 1989 (30.06.1989),<br>entire text; all drawings<br>(Family: none) | 1-6 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H0423179 B
- JP H08279038 B
- JP 2011121105 A